# EUROPÄISCHE PATENTSCHRIFT

(11) **EP 3 965 365 B1**
(45) Veröffentlichungstag und Bekanntmachung des Hinweises auf die Patenterteilung: **26.02.2025**
(21) Anmeldenummer: 21182338.0
(22) Anmeldetag: 29.06.2021
(51) Int. Cl.: H04L 12/12

(54) **BASISMODUL EINES NETZWERKAUFBAUS SOWIE NETZWERKAUFBAU UND VERFAHREN ZUM KONFIGURIEREN EINES ERWEITERUNGSMODULS DES NETZWERKAUFBAUS**
NETWORK STRUCTURE BASE MODULE AND NETWORK STRUCTURE AND METHOD FOR CONFIGURING AN EXPANSION MODULE OF THE NETWORK STRUCTURE
MODULE DE BASE D'UNE CONSTITUTION DE RÉSEAU, AINSI QUE CONSTITUTION DE RÉSEAU ET PROCÉDÉ DE CONFIGURATION D'UN MODULE D'EXTENSION DE LA CONSTITUTION DE RÉSEAU

(30) Priorität: 07.09.2020 DE 102020123332
(43) Veröffentlichungstag der Anmeldung: 09.03.2022
(73) Patentinhaber: LEDVANCE GmbH, 85748 Garching (DE)
(72) Erfinder: CHILACHAVA, David, 81543 München (DE); NIGGEBAUM, Alexander, 80805 München (DE); KLIER, Philipp, 80804 München (DE)
(74) Vertreter: Lanchava, Bakuri

(56) Entgegenhaltungen:
- WO-A1-2018/029518
- DE-A1- 102010 052 726
- DE-A1- 102011 107 318

## Beschreibung

Die vorliegende Offenbarung betrifft im Allgemeinen Netzwerkaufbauten. Im Speziellen betrifft die vorliegende Offenbarung elektronische Netzwerkaufbauten mit erweiterbarer Funktionalität.

Elektronische Vorrichtungen bzw. Betriebsgeräte werden immer komplexer und weisen eine zunehmende Anzahl von Funktionalitäten auf, welche in der Regel durch entsprechende Funktionseinheiten, wie etwa Sensorik, Kommunikationsschnittstellen, intelligente Elektronik, realisiert werden. Es sind ferner Netzwerkgeräte bekannt, die sich in Gerätenetzwerken bzw. IoT (Internet of Things) beteiligen können, wie beispielsweise Leuchten bzw. Leuchtvorrichtungen, in einem Licht-Management-System oder LMS (Light Management System). Insbesondere kann das Anbinden einer Leuchte an ein IoT-Netzwerk bzw. LMS mittels zusätzlicher, netzwerkspezifischer Hardware- und Software-Einheiten realisiert werden, die grundsätzlich für jedes Netzwerk unterschiedlich sein können, wie beispielhaft in WO 2018/029518 A1 gezeigt wird. Ferner werden Netzwerkgeräte bzw. Leuchten ständig hochgerüstet, um den modernen Anforderungen an Steuerbarkeit und Netzwerkfähigkeit gerecht zu werden. Die bereits vorhandenen Zusatzeinheiten können nicht ohne weiteres für andere Netzwerke bzw. andere Zwecke verwendet werden, was zu hohen Kosten und hohen Umweltbelastungen führen kann.

Eine Aufgabe der Ausführungsformen der vorliegenden Offenbarung ist es, einen Netzwerkaufbau für Netzwerkgeräte bereitzustellen, welcher auf flexible und kostengünstige Weise mit Zusatzfunktionalitäten ausgestattet werden kann.

Zur Lösung dieser Aufgabe wird nach einem ersten Aspekt ein Basismodul entsprechend Anspruch 1 bereitgestellt.

Der Kommunikationsbus kann insbesondere dazu ausgebildet sein, zwischen der Logikeinheit und den Erweiterungsmodulen Daten bzw. Signale zu übertragen. In einigen Ausführungsformen ist der Kommunikationsbus dazu ausgebildet, eine oder mehrere Erweiterungsmodule mit elektrischer Energie zu versorgen. Der Kommunikationsbus kann insbesondere Signalleitungen für eine serielle Kommunikation bzw. Übertragung von Botschaften und/oder Versorgungsleitungen zur Energieversorgung der Erweiterungsmodule bzw. Peripherals umfassen. In einigen Ausführungsformen ist der Kommunikationsbus als Teil des Basismoduls ausgebildet. Insbesondere kann der Kommunikationsbus dazu ausgebildet sein, mit einer Vielzahl von Funktionsgeräten und/oder Kommunikationsmodulen als Erweiterungsmodule verbunden zu werden, um erwünschte Funktionalitäten bereitzustellen.

Die Logikeinheit stellt insbesondere den zentralen Baustein bzw. Knoten dar, über welchen, insbesondere sämtliche, Netzwerkkommunikation erfolgen kann. Der Logik bzw. der Logikeinheit kommt somit in einem solchen modular aufgebauten Netzwerkaufbau die zentrale Rolle zu. Die Logikeinheit kann dabei Informationen gemäß der bestimmungsgemäßen Betriebsszenarien weiterleiten, verarbeiten und/oder verändern. Die Logikeinheit kann insbesondere einen Mikrocontroller mit einem Prozessor zur Datenverarbeitung, mit einer Speichereinheit zur Speicherung von Daten und maschinenlesbaren Codes für den Prozessor sowie mit einer Schnittstelle zum Anbinden der Logikeinheit an den Kommunikationsbus umfassen. Die Logikeinheit bzw. der Mikrocontroller können ferner eine oder mehrere weitere Schnittstellen insbesondere zum Konfigurieren von digitalen Ein- und Ausgängen und/oder zum Übersetzen von Messignalen umfassen. Das Konfigurieren der Logikeinheit zum Ausführen von bestimmten Aktionen bedeutet in diesem Zusammenhang, dass zur Ausführung dieser Aktionen in der Speichereinheit der Logikeinheit entsprechende maschinenlesbare Anweisungen für den Prozessor gespeichert werden.

Die Logikeinheit kann derart konfiguriert sein, dass die Kommunikation über den Kommunikationsbus zwischen der Logikeinheit und den Erweiterungsmodulen, insbesondere ausschließlich, über ein systeminternes bzw. proprietäres Kommunikationsprotokoll erfolgen kann. Das systeminterne Kommunikationsprotokoll kann insbesondere einen unbefugten Zugang zu dem Kommunikationsbus des Netzwerkaufbaus erschweren bzw. verhindern. Insbesondere kann die Verwendung des systeminternen bzw. proprietären Kommunikationsprotokolls das Anschließen nicht zugelassenen Erweiterungsmodulen an das Basismodul erschweren oder verhindern. Somit kann der Kommunikationsbus als eine geschützte, proprietäre Schnittstelle bzw. ILB (Intra Luminaire Bus) zum Austausch von Daten, bzw. Botschaften zwischen der Logikeinheit und den Erweiterungsmodulen bzw. Peripherals dienen.

Die Funktionsgeräte bzw. Peripherals können insbesondere Sensorik bzw. diverse Sensoren, Treiber, insbesondere LED-Treiber, Push-Buttons und/oder weitere Geräte umfassen. Im Falle einer Leuchte kann ein Funktionsgerät dazu ausgebildet sein, die Lichtmenge des durch die Leuchte erzeugten Lichtes zu erfassen bzw. zu steuern. Eine Leuchte kann insbesondere eine oder mehrere Lichtquellen aufweisen. Insbesondere kann eine Leuchte eine Lichtquelle zur Erzeugung eines indirekten Lichtes, wie etwa bei einer diffus leuchtenden Leuchtvorrichtung, und eine Lichtquelle zur Erzeugung eines direkten Lichts, wie bei einem Lichtstrahler, umfassen. Dabei kann die Steuerung der Lichtmenge unmittelbar über die Logikeinheit oder über das LMS erfolgen, in dem die Leuchte eingebunden ist. Die Funktionsgeräte können auch zur Datenerfassung und/oder -übertragung an das LMS dienen. Beispielsweise können die Funktionsgeräte CO₂- und/oder Temperatursensoren umfassen, die aktuelle CO₂-Konzentration bzw. den Temperaturwert erfassen bzw. überwachen, und die erfassten Daten, beispielsweise zum Zweck der Gebäudewartung bzw. Maintenance, liefern. Außerdem kann diese Information für die Optimierung des Energieverbrauchs bzw. zur Erhöhung der Effizienz von Betriebsabläufen verwendet werden.

Das eine oder die mehreren Kommunikationsmodule kann/können ein für die drahtlose Kommunikation ausgebildetes Modul umfassen. Das Erweiterungsmodul kann insbesondere eine ZigBee-, Bluetooth-, DALI-Schnittstelle umfassen. ZigBee ^{®} ist eine eingetragene Marke der ZigBee-Alliance. Bluetooth ^{®} ist eine eingetragene Marke der Bluetooth Special Interest Group. DALI ^{®} (Digital Addressable Lighting Interface) ist eine eingetragene Marke des internationalen Standardisierungskonsortiums für Licht und Gebäude-Automatisierungsnetzwerke. Durch die Verwendung von standardisierten Schnittstellen können an dem Kommunikationsmodul angeschlossenen Funktionsgeräte über Standardprotokolle ferngesteuert bzw. in ein LMS eingebunden werden. Das Kommunikationsmodul kann insbesondere dazu ausgebildet sein, als Dolmetscher zwischen der Logikeinheit und dem LMS zu fungieren, in dem es über ein Standardprotokoll mit dem LMS kommuniziert und über das interne bzw. proprietäres Protokoll des Kommunikationsbusses mit der Logikeinheit kommuniziert. Ein LMS ermöglicht den Kunden unterschiedliche Leuchten einzeln oder gruppiert zu steuern und von einfachen bis zu komplexen Lichtszenen zu definieren. Ein Erweiterungsmodul kann auch gleichzeitig ein Kommunikationsmodul und ein Funktionsgerät darstellen, beispielsweise ein ZigBee-Modul mit einem integrierten PIR-Sensor (Passive Infrared Sensor).

Aufgrund der Anbindbarkeit der Logikeinheit über den Kommunikationsbus mit einem oder mehreren Erweiterungsmodulen kann der Netzwerkaufbau um die Logikeinheit als Zentraleinheit bzw. "Core-Module" herum modular und flexibel auf- bzw. ausgebaut werden. Somit kann durch das Basismodul ein Interconnect-System realisiert werden, welches dem Kunden erlaubt, die Funktionalität, Komplexität und Kosten von Betriebsgeräten bzw. von Leuchten zu bestimmen und an den eigenen Bedarf anzupassen. Insbesondere stellt das Basismodul eine Design-Plattform dar, welche Funktionsgeräten einen freien und flexiblen Einsatz ggf. unter Einhaltung von etwaigen Normen, Standards und Anforderungen in gewünschtem Gerätenetzwerk bzw. Lichtmanagementsystem ermöglicht.

Die Logikeinheit kann dazu konfiguriert sein, über den Kommunikationsbus nach einem an dem Kommunikationsbus angeschlossenen Erweiterungsmodul zu suchen. Diese Suchfunktion ermöglicht der Logikeinheit festzustellen, ob ein bzw. ein weiteres Erweiterungsmodul an den Kommunikationsmodul angeschlossen wurde, um ggf. entsprechend darauf zu reagieren. Die Logikeinheit kann dazu konfiguriert sein, ein Erweiterungsmodul für den Kommunikationsbus zu konfigurieren, wenn das Suchen ergibt, dass das Erweiterungsmodul an dem Kommunikationsbus angeschlossen ist. Insbesondere kann die Logikeinheit ein an dem Kommunikationsbus angeschlossenes Kommunikationsmodul automatisch bestimmungsgemäß konfigurieren, so dass beispielsweise durch das Konfigurieren eines Kommunikationsmoduls der Netzwerkaufbau automatisch für ein LMS initialisiert wird.

In einigen Ausführungen weist die Logikeinheit eine weitere Schnittstelle, insbesondere eine Plug-&-Play-Schnittstelle, auf, zum Anschließen einer Plug-&-Play-Funktionseinheit bzw. eines Funktionsgeräts, die/das von der Logikeinheit über Steuersignale direkt ansteuerbar ist. Beispielsweise kann ein LED-Treiber ohne mikrocontrollerbasierte Eigenintelligenz an die Plug-&-Play-Schnittstelle angeschlossen und von der Logikeinheit direkt angesteuert werden. In einem solchen Fall können die im Werk eingestellten Variablen des LED-Treibers direkt in der Logikeinheit gespeichert werden. Intelligente LED-Treiber, die eigene Microcontroller besitzen, können an den Kommunikationsbus bzw. ILB-Schnittstelle angeschlossen werden.

Nach einem zweiten Aspekt wird ein Netzwerkaufbau mit einem Basismodul gemäß dem ersten Aspekt bereitgestellt. Der Netzwerkaufbau umfasst wenigstens ein Erweiterungsmodul, insbesondere eines oder mehrere Funktionsgeräte und/oder Kommunikationsmodule, zur Funktionserweiterung bzw. zur Funktionsbereitstellung des Netzwerkaufbaus, und einen Kommunikationsbus zum Bereitstellen einer Kommunikation zwischen der Logikeinheit des Basismoduls und dem einen oder mehreren Erweiterungsmodulen.

Die modulare Bauweise des Netzwerkaufbaus ermöglicht es, den Netzwerkaufbau mit Erweiterungsmodulen auf einfache Weise aus- bzw. nachzurüsten.

Der Netzwerkaufbau kann wenigstens eine Lichtquelle, insbesondere wenigstens eine LED-Lichtquelle, und wenigstens einen Treiber, insbesondere einen LED-Treiber, zum Antreiben der wenigstens einer Lichtquelle umfassen, wobei der wenigstens einen Treiber als ein an den Kommunikationsbus anschließbares Funktionsgerät ausgebildet sein kann. Insbesondere kann der Netzwerkaufbau als Leuchte ausgebildet sein. Eine solche Leuchte kann auf einfache Weise mit Zusatzfunktionen ausgestattet werden, indem an den Kommunikationsbus zusätzliche Erweiterungsmodule, wie zusätzliche Funktionsgeräte und/oder Kommunikationsmodule, angeschlossen werden.

In einigen Ausführungen umfasst der Netzwerkaufbau einen Plug-&-Play-LED-Treiber, der an der Plug-&-Play-Schnittstelle der Logikeinheit angeschlossen ist und direkt von der Logikeinheit angesteuert werden kann. Somit können einfache LED-Treiber, die nicht in der Lage sind, über den systeminternen Kommunikationsbus mit der Logikeinheit zu kommunizieren, unmittelbar durch die Plug-&-Play-Schnittstelle angesteuert werden.

Das wenigstens ein Erweiterungsmodul kann wenigstens ein Kommunikationsmodul zum Anbinden des Netzwerkaufbaus, insbesondere über ein standardisiertes Protokoll, an ein Netzwerksystem bzw. LMS umfassen. Insbesondere kann das wenigstens eine Kommunikationsmodul als ein Kommunikationsmodul zur drahtlosen Kommunikation mit einem Netzwerksystem bzw. LMS ausgebildet sein.

Nach einem dritten Aspekt wird ein Verfahren zum Konfigurieren eines Erweiterungsmoduls eines Netzwerkaufbaus nach Anspruch 6 bereitgestellt.

Das Verfahren kann ein Abfragen umfassen, ob das beim Suchen gefundene Erweiterungsmodul ein Kommunikationsmodul ist, wobei das Erweiterungsmodul dazu bestimmt werden kann, ein in dem Netzwerkaufbau vorhandenes Funktionsgerät durch das Kommunikationsmodul in einem Netzwerk zu repräsentieren, wenn die Abfrage ergibt, dass das beim Suchen gefundene Erweiterungsmodul ein Kommunikationsmodul ist. Ein an dem Kommunikationsbus angeschlossenes Kommunikationsmodul kann somit ggf. zum Anschließen des Netzwerkaufbaus an dem Netzwerk, insbesondere LMS, automatisch konfiguriert werden.

Das Repräsentieren kann ein Benachrichtigen des Kommunikationsmoduls über den Typ des vorhandenen Funktionsgeräts umfassen. Somit kann ggf. die Information über den Typ des Funktionsgeräts über das Kommunikationsmodul an das Netzwerk, insbesondere LMS, automatisch weitergegeben werden.

Das Verfahren kann ferner ein Senden von netzwerkrelevanten bzw. -notwendigen Werkseinstellungen des Funktionsgeräts an das Kommunikationsmodul umfassen. Somit kann ggf. die Information über die Werkseinstellungen des Funktionsgeräts über das Kommunikationsmodul an das Netzwerk, insbesondere LMS, automatisch weitergegeben werden.

Der oben beschriebene Netzwerkaufbau erlaubt es, in den Fällen, wenn der Netzwerkaufbau ein als Leuchte ausgebildetes Erweiterungsmodul umfasst, die Leuchten nachträglich, insbesondere nach einem bestimmungsgemäßen Installieren, zu kalibrieren. Insbesondere können die Kalibrierdaten an einer Leuchte gleichen Typs erfasst und an den Netzwerkaufbau über ein als, insbesondere online-fähiges, Kommunikationsmodul ausgebildetes Erweiterungsmodul übertragen werden. Somit können solche Leuchten installations- und herstellerunabhängig nachträglich kalibriert werden.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch einen Netzwerkaufbau gemäß einem Ausführungsbeispiel,
- Fig. 2: zeigt schematisch einen Netzwerkaufbau gemäß einem weiteren Ausführungsbeispiel,
- Fig. 3: zeigt schematisch einen Netzwerkaufbau gemäß einem anderen Ausführungsbeispiel,
- Fig. 4: zeigt schematisch einen Netzwerkaufbau gemäß einem weiteren Ausführungsbeispiel,
- Fig. 5: zeigt schematisch einen Netzwerkaufbau gemäß einem anderen Ausführungsbeispiel,
- Fig. 6: zeigt ein Flussdiagramm eines Verfahrens zum Konfigurieren eines Erweiterungsmoduls gemäß einem Ausführungsbeispiel, und
- Fig. 7: zeigt ein Flussdiagramm eines Verfahrens zum Kalibrieren einer Leuchte.

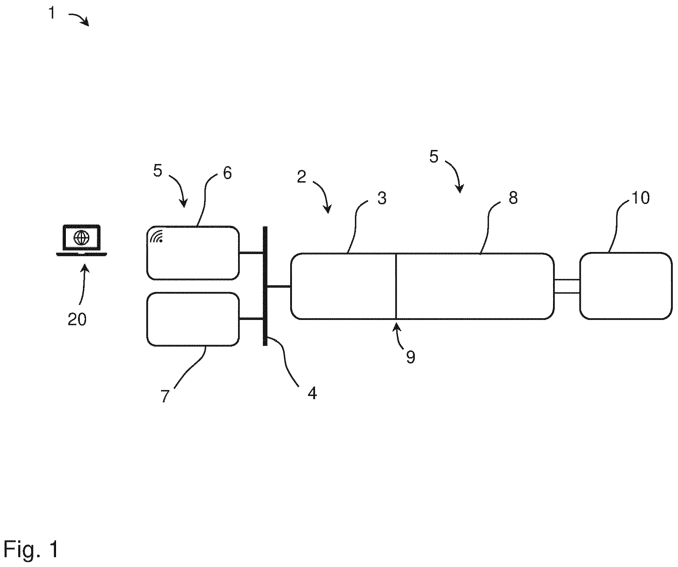

Fig. 1 zeigt schematisch einen Netzwerkaufbau bzw. Interconnect gemäß einem Ausführungsbeispiel. Der Netzwerkaufbau 1 umfasst ein Basismodul 2 mit einer Logikeinheit 3, einen Kommunikationsbus 4 sowie Erweiterungsmodule 5, welche sich in einer funktionellen Verbindung mit der Logikeinheit 3 befinden. In dem Ausführungsbeispiel der Fig. 1 sind es drei Erweiterungsmodule 5, die mit der Logikeinheit 3 verbunden sind. Ein Erweiterungsmodul 5 in Form eines Zigbee-Moduls 6 und ein Erweiterungsmodul 5 in Form eines Sensormoduls 7 sind über den Kommunikationsbus 4 mit der Logikeinheit 3 verbunden. Ein Erweiterungsmodul 5 in Form eines LED-Treibers 8 ist über eine Schnittstelle 9 mit der Logikeinheit 3 verbunden. Fig. 1 zeigt auch eine Lichtquelle 10, die mit dem LED-Treiber 8 elektrisch verbunden ist, und durch den LED-Treiber 8 angesteuert werden kann. Das Zigbee-Modul 6 ist dazu ausgebildet, mit einem LMS 20 (in Fig. 1 symbolisch dargestellt) verbunden zu werden.

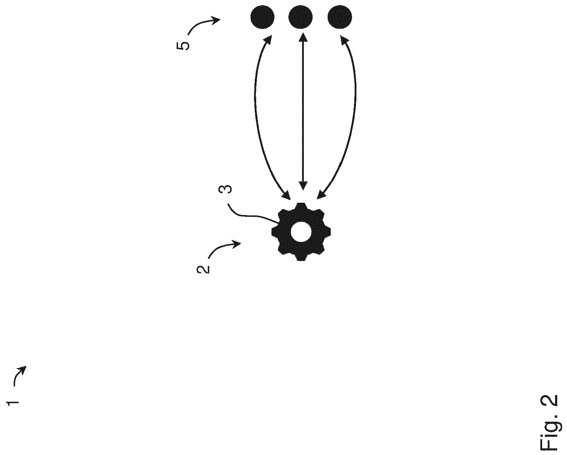

Fig. 2 zeigt schematisch einen Netzwerkaufbau gemäß einem weiteren Ausführungsbeispiel. Der Netzwerkaufbau 1 bzw. Interconnect der Fig. 2 umfasst ein Basismodul 2 mit einer Logikeinheit 3 sowie Erweiterungsmodule 5, welche sich in einer funktionellen Verbindung mit der Logikeinheit 3 befinden. Die funktionelle Verbindung zwischen der Logikeinheit 3 und den Erweiterungsmodulen 5 wird durch doppelseitige Pfeile schematisch dargestellt. Die Erweiterungsmodule 5 können sowohl Funktionsgeräte als auch Kommunikationsmodule sein. In diesem Ausführungsbeispiel stellt der Netzwerkaufbau 1 eine Standalone-Leuchte dar, wobei eines der Erweiterungsmodule 5 als LED-Treiber zur Lichtsteuerung der Leuchte ausgebildet ist.

Die Erweiterungsmodule 5 sind ähnlich wie in Fig. 1 über einen Kommunikationsbus bzw. ILB (in Fig. 2 nicht gezeigt) mit der Logikeinheit 3 verbunden. Die Logikeinheit 3 kann insbesondere derart konfiguriert sein, dass die funktionelle Verbindung bzw. Kommunikation über den Kommunikationsbus zwischen der Logikeinheit 3 und den Erweiterungsmodulen 5 über ein systeminternes bzw. proprietäres Kommunikationsprotokoll erfolgen kann. In einigen Ausführungsformen sind alle Erweiterungsmodule 5 ausschließlich über einen proprietären ILB mit der Logikeinheit 3 verbunden. In einigen Ausführungsformen weist die Logikeinheit 3 eine zusätzliche Schnittstelle, insbesondere eine Plug-&-Play-Schnittstelle, auf, an welcher insbesondere ein LED-Treiber direkt angeschlossen werden kann. Die Plug-&-Play-Schnittstelle kann als eine geschützte proprietäre Schnittstelle ausgebildet sein, so dass ein Einsatz von nicht zugelassenen bzw. nicht qualifizierten LED-Treibern oder anderer Erweiterungsmodule verhindert werden kann. Insbesondere kann die Logikeinheit 3 derart konfiguriert sein, dass ein LED-Treiber, welcher keine mikrocontrollerbasierte Eigenintelligenz aufweist, direkt an die Plug-&-Play-Schnittstelle angeschlossen werden kann. In einem solchen Fall können etwaige im Werk eingestellte Variablen des LED-Treibers direkt in der Logikeinheit gespeichert werden, so dass der LED-Treiber von der Logikeinheit 3 direkt angesteuert werden kann. Für die LED-Treiber bzw. für weitere Erweiterungsmodule 5, welche eigene Intelligenz bzw. eigenen Microcontroller besitzen, ist die Anbindung an der Logikeinheit 3 über den Kommunikationsbus 4 bzw. ILB möglich. Die Logikeinheit 3 kann dazu ausgebildet sein, über den ILB nach Erweiterungsmodule 5 bzw. nach Peripherals zu suchen, und in einem Standalone-Mode, insbesondere ohne Einbindung des Netzwerkaufbaus 1 in einem LMS, über den ILB Botschaften zu empfangen, bearbeiten und an Peripherals zu versenden.

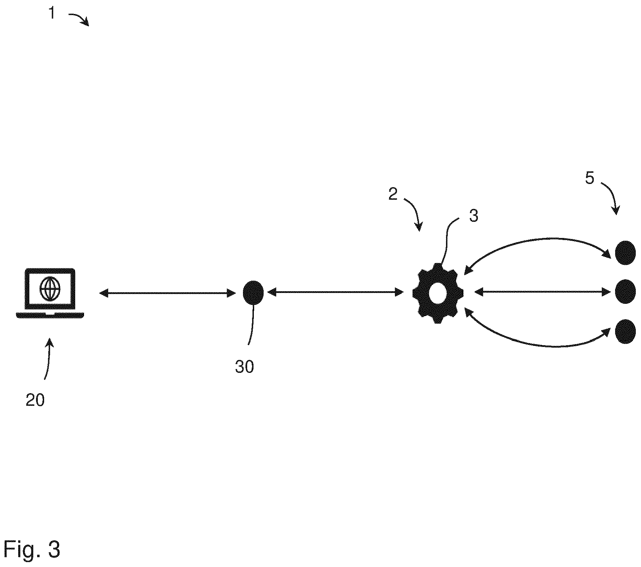

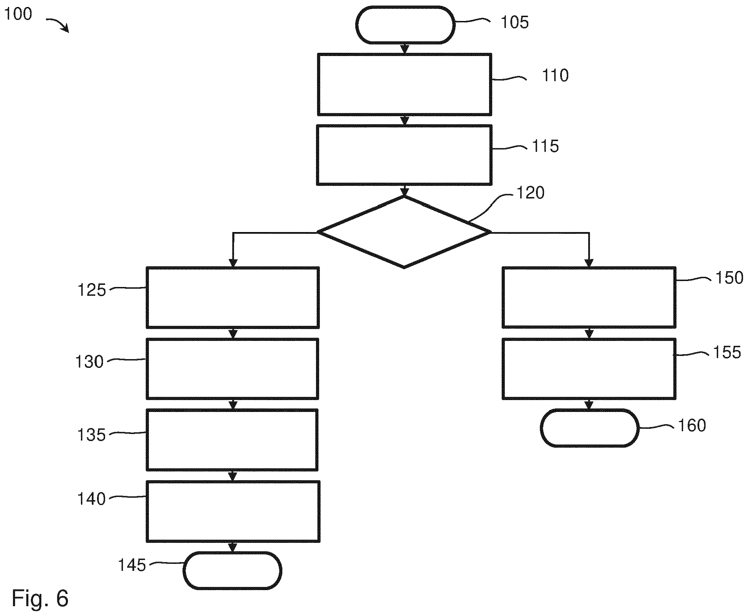

Fig. 3 zeigt schematisch einen Netzwerkaufbau gemäß einem anderen Ausführungsbeispiel. Der Netzwerkaufbau 1 der Fig. 3 entspricht im Wesentlichen dem Netzwerkaufbau 1 der Fig. 2 und weist zusätzlich ein Erweiterungsmodul in Form eines Kommunikationsmoduls 30 auf, über welches der Netzwerkaufbau 1 an einem LMS 20 (symbolisch dargestellt) angebunden werden kann. Die weiteren Erweiterungsmodule 5, die als Funktionsgeräte ausgebildet sind, sind über die Logikeinheit 3 mit dem Kommunikationsmodul 30 verbunden. Die Verbindung zwischen den Funktionsgeräten und dem Kommunikationsmodul 30 kann über die Logikeinheit 3 flexibel gestaltet werden. Insbesondere können die Funktionsgeräte dem Kommunikationsmodul 30 über die Logikeinheit 3 einzeln, gruppiert, oder gar nicht zugeordnet werden. Die Logikeinheit 3 kann insbesondere dazu konfiguriert sein, nach dem Detektieren eines an dem Kommunikationsbus 4 angebundenen Kommunikationsmoduls 30 dieses entsprechend zu konfigurieren und für die Teilnahme in einem entsprechenden LMS 20 zu initialisieren. Das Flussdiagramm der Fig. 6 unten zeigt den entsprechenden Prozessablauf.

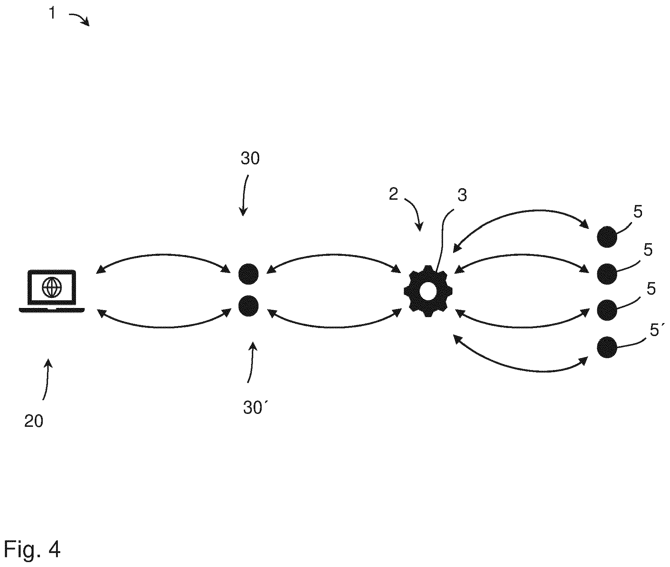

Fig. 4 zeigt schematisch einen Netzwerkaufbau gemäß einem weiteren Ausführungsbeispiel. Der Netzwerkaufbau 1 der Fig. 4 entspricht im Wesentlichen dem Netzwerkaufbau 1 der Fig. 3 und weist zusätzlich ein weiteres Kommunikationsmodul 30' auf. Somit weist der Netzwerkaufbau 1 der Fig. 4 neben einem ersten Kommunikationsmodul 30 ein zweites Kommunikationsmodul 30' auf, wobei der Netzwerkaufbau 1 über das erstes Kommunikationsmodul 30 und das zweite Kommunikationsmodul 30' an einem LMS 20 (symbolisch dargestellt) angebunden werden kann. Das in Fig. 4 gezeigt Ausführungsbeispiel entspricht insbesondere dem Fall, wenn die Anzahl der Funktionsgeräte das Limit eines Kommunikationsmoduls zum einwandfreien Betrieb in einem LMS erreicht, wonach ein weiteres Kommunikationsmodul gleichen Typs an der Logik angebracht wird. Die Logikeinheit 3 kann insbesondere dazu konfiguriert sein, über den Kommunikationsbus 4 bzw. ILB mit einer Vielzahl von Kommunikationsmodulen 30, 30' verbunden zu werden, so dass ein einwandfreier Betrieb von mehreren Funktionsgeräten in einem LMS gewährleistet werden kann. Die Logikeinheit 3 kann insbesondere konfiguriert sein, Funktionsgeräte den einzelnen Kommunikationsmodulen 30, 30' zuzuordnen, so dass der Netzwerkaufbau 1 durch Aufnahme weiterer Funktionsgeräte auf einfache Weise skaliert werden kann. Beispielsweise können einige Erweiterungsmodule 5 bzw. Funktionsgeräte dem ersten Kommunikationsmodul 30 und andere Erweiterungsmodule 5' bzw. Funktionsgeräte dem zweiten Kommunikationsmodul 30' zugeordnet werden.

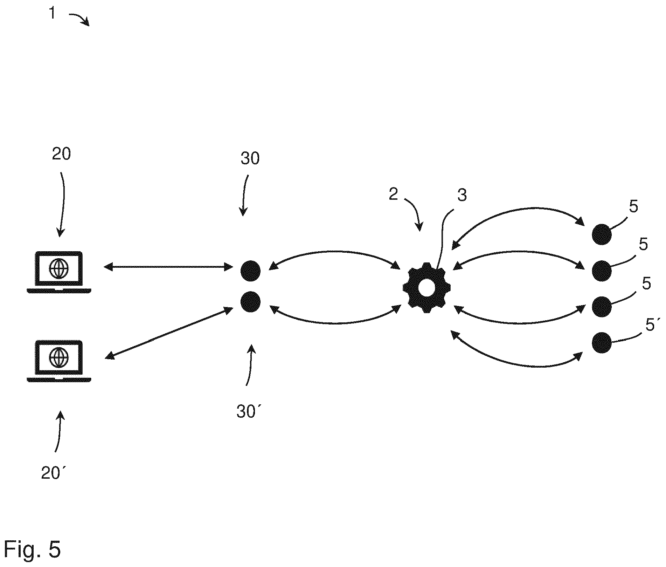

Fig. 5 zeigt schematisch einen Netzwerkaufbau gemäß einem anderen Ausführungsbeispiel. Der Netzwerkaufbau 1 der Fig. 5 entspricht im Wesentlichen dem Netzwerkaufbau 1 der Fig. 4. Dabei bezieht sich Fig. 5 auf einen Anwendungsfall, wenn dem Kunden eine Möglichkeit gegeben wird, die mit der Logikeinheit 3 verbundenen Erweiterungsmodule 5, 5' bzw. Funktionsgeräte alternativ oder gleichzeitig in zwei LMS 20, 20' darzustellen. Hierfür werden, gemäß dem gezeigten Ausführungsbeispiel, zwei unterschiedliche Kommunikationsmodule 30, 30' eingesetzt, die durch die Logikeinheit 3 konfiguriert werden können. Die Logikeinheit 3 wechselt in diesem Fall zu einem Multimaster-Mode-Betrieb, bedingt durch eine gleichzeitige Existenz von zwei unterschiedlichen LMS 20, 20'.

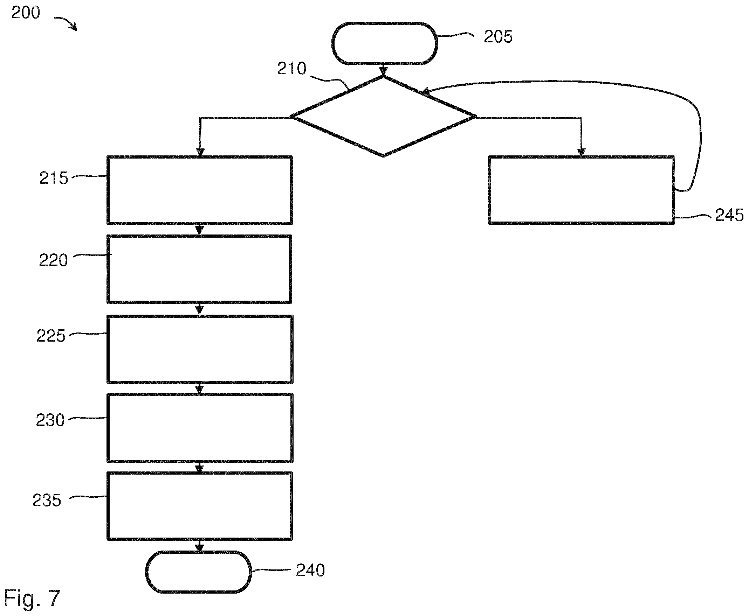

Die in Figuren 1, 3, 4 und 5 oben beschriebenen Netzwerkaufbauten können dazu ausgebildet sein, eine Leuchte für präzisere Farbsteuerung und optimierte Wartung nachträglich zu kalibrieren. Beispielsweise können die Messungen bei Leuchten mit zur Verfügung gestellten gleichem Leuchtentyp durchgeführt und die Kalibrierungsdaten für die bestehende Installation als ein Online-Update zur Verfügung gestellt werden. Für diese Option wird in dem Aufbau ein Erweiterungsmodul bzw. Peripheral angebracht, oder gegebenenfalls benutzt, welche eine "Online-Update" Fähigkeit (z.B. ZigBee-Peripheral) besitzt. Diese Kalibrierungsdaten können insbesondere Informationen über die wärmste und kälteste Farbtemperatur, den nominalen Lichtstrom und die Leistung der Leuchte, und/oder einem Colour Rendering Index (CRI) sowie Angaben über die Hersteller usw. beinhalten. Ein Durchführungsbeispiel einer solchen nachträglichen Kalibrierung wird in Fig. 7 als Flussdiagramm dargestellt.

Fig. 6 zeigt ein Flussdiagramm eines Verfahrens zum Konfigurieren eines Erweiterungsmoduls gemäß einem Ausführungsbeispiel. Das in Fig. 6 gezeigte Verfahren 100 zum Konfigurieren eines Erweiterungsmoduls bzw. Peripherals kann insbesondere in einem der Netzwerkaufbauten gemäß Figuren 1, 3, 4, und 5 ausgeführt werden. Gemäß dem in Fig. 6 gezeigten Ausführungsbeispiel des Verfahrens 100 wird nach einem Start 105 des Verfahrens 100 in dem Verfahrensschritt 110 nach einem Peripheral bzw. einem an dem Basismodul 2, insbesondere über den Kommunikationsbus 4 bzw. ILB, angeschlossenen Erweiterungsmodul 5 gesucht. In dem darauffolgenden Schritt 115 wird das gefundene Peripheral bzw. Erweiterungsmodul 5 für den Kommunikationsbus bzw. ILB konfiguriert. Durch das Konfigurieren des Erweiterungsmoduls in dem Verfahrensschritt 115 wird das Erweiterungsmodul 5 bzw. Peripheral befähigt, an der Kommunikation über den Kommunikationsbus 4 teilzunehmen. In einem Abfrageschritt 120 wird abgefragt, ob das gefundene Erweiterungsmodul bzw. Peripheral ein Kommunikationsmodul ist.

Ergibt sich die Abfrage in dem Schritt 120, dass das gefundene Erweiterungsmodul 5 ein Kommunikationsmodul ist, so kann in dem Verfahrensschritt 125 das Kommunikationsmodul dazu bestimmt werden, ein in dem Netzwerkaufbau 1 bereits vorhandenes Funktionsgerät in einem LMS zu repräsentieren. In dem Verfahrensschritt 130 wird dann das Peripheral bzw. das Kommunikationsmodul 30 über den Typ des zu repräsentierenden Funktionsgeräts benachrichtigt. In dem Verfahrensschritt 135 werden dann die für die Teilnahme an dem LMS notwendigen Werksteinstellungen des Funktionsgeräts an das Kommunikationsmodul 30 gesendet. In dem Verfahrensschritt 140 wird das Peripheral bzw. das gefundene Kommunikationsmodul zur Teilnahme im LMS aktiviert. Daraufhin wird das Verfahren 100 zum Konfigurieren des Erweiterungsmoduls mit dem Verfahrensschritt 145 beendet.

Ergibt sich der Abfrageschritt 120, dass das Erweiterungsmodul kein Kommunikationsmodul ist, so wird das Erweiterungsmodul in dem Verfahrensschritt 150 als Funktionsgerät erkannt. In dem darauffolgenden Verfahrensschritt 155 wird das Funktionsgerät initialisiert und das Verfahren mit dem Verfahrensschritt 145 beendet.

Fig. 7 zeigt ein Flussdiagramm eines Verfahrens zum Kalibrieren einer Leuchte. Das in Fig. 7 gezeigte Verfahren 200 kann insbesondere zum Kalibrieren einer Leuchte durchgeführt werden, welche eine innere Architektur gemäß einem der in Figuren 1 bis 5 gezeigten Netzwerkaufbauten aufweist. Gemäß dem in Fig. 7 gezeigten Ausführungsbeispiel des Verfahrens 200 wird nach einem Start 205 des Verfahrens 200 ein Abfrage 210 durch die Logikeinheit 3 durchgeführt, ob eine Leuchte vorhanden bzw. an dem ILB angeschlossen ist. Ergibt sich die Abfrage 210, dass eine Leuchte vorhanden ist, so wird in dem Verfahrensschritt 215 eine Leuchte, insbesondere des gleichen Leuchtentyps, zur Kalibrierung durchgemessen. In dem Verfahrensschritt 220 werden Daten zur Kalibrierung erfasst und in dem Verfahrensschritt 225 werden die erfassten Daten zur Kalibrierung an ein online-fähiges Peripheral bzw. Kommunikationsmodul des Netzwerkaufbaus übertragen. In dem darauffolgenden Schritt 230 wird die Logikeinheit 3 über die erhaltenen Daten informiert und die Steuerung, insbesondere die Farbsteuerung der Leuchte, entsprechend angepasst. In dem Verfahrensschritt 235 werden die Leuchtendaten für das LMS zur Verfügung gestellt und mit dem Verfahrensschritt 240 wird das Verfahren beendet. Ergibt sich die Abfrage im Schritt 120, dass keine Leuchte, insbesondere keine Leuchte mit dem erforderlichen Leuchtentyp, vorhanden ist, so wird in dem Verfahrensschritt 245 eine Leuchte zum Durchmessen angefragt.

Diese Möglichkeit der Kalibrierung erlaubt den Kunden, den mit Inbetriebnahme eines LMS verbundenen logistischen Aufwand zu minimieren. Denn für gewöhnlich werden die Leuchten mit einem LED-Treiber im Werk einzeln kalibriert. Bei den hier beschriebenen Leuchten können die Leuchten flexibel, insbesondere bei gewünschten Herstellern, eingekauft und erst nachträglich, insbesondere gemäß dem oben beschriebenen Kalibrierverfahren, kalibriert werden.

Neben der Möglichkeit der nachträglichen werkunabhängigen Kalibrierung bieten die oben beschriebenen auf dem Plattformdesign basierten Netzwerkaufbauten eine Reihe von Vorteilen. Solche Netzwerkaufbauten bzw. Systeme können beispielsweise auf einfache Weise hochskaliert werden, indem weitere Erweiterungsmodule, insbesondere Funktionsgeräte und/oder Kommunikationsmodule, an den Kommunikationsbus bzw. ILB angeschlossen werden. Ferner können Funktionsgeräte flexibel, je nach Bedarf, in unterschiedlichen Netzwerken bzw. LMSen oder in einer Standalone-Vorrichtung bzw. -Leuchte eingesetzt werden. Des Weiteren können unterschiedliche Funktionsgeräte, aufgrund der Flexibilität der Kommunikationsmodule, sowohl einzeln als auch gleichzeitig in ein LMS eingebunden werden. Die Modularität des Netzwerkaufbaus vereinfacht dabei den Wechsel von einem, beispielsweise veraltetem, LMS, zu einem anderen, insbesondere zukunftssicheren, LMS, ohne die bereits vorhandenen Funktionsgeräte verwerfen zu müssen. Neben unmittelbaren wirtschaftlichen Vorteilen kann dies speziell im Hinblick auf die "Circular Economy" bzw. Kreislaufwirtschaft und wegen immer strenger werdenden Umweltschutzregulierungen eine entscheidende Bedeutung sowohl für Leuchtenhersteller als auch für die Kunden haben. Durch die nachträgliche Kalibrierfähigkeit der Leuchten kann insbesondere eine präzise Lichtfarbensteuerung sowie eine hochqualitative Human Centric Lighting (HCL) realisiert werden, indem beispielsweis das Tageslicht besonders realitätsgetreu nachgeahmt wird.

### Bezugszeichenliste

- 1: Netzwerkaufbau
- 2: Basismodul
- 3: Logikeinheit
- 4: Kommunikationsbus
- 5, 5': Erweiterungsmodul
- 6: Zigbee-Modul
- 7: Sensormodul
- 8: LED-Treiber
- 9: Schnittstelle
- 10: Lichtquelle

- 20, 20': LMS

- 30, 30': Kommunikationsmodul

- 100: Verfahren zum Konfigurieren eines Erweiterungsmoduls
- 105: Verfahrensschritt
- 110: Verfahrensschritt
- 115: Verfahrensschritt
- 120: Verfahrensschritt
- 125: Verfahrensschritt
- 130: Verfahrensschritt
- 135: Verfahrensschritt
- 140: Verfahrensschritt
- 145: Verfahrensschritt
- 150: Verfahrensschritt
- 155: Verfahrensschritt
- 160: Verfahrensschritt

- 200: Verfahren zum Kalibrieren einer Leuchte
- 205: Verfahrensschritt
- 210: Verfahrensschritt
- 215: Verfahrensschritt
- 220: Verfahrensschritt
- 225: Verfahrensschritt
- 230: Verfahrensschritt
- 235: Verfahrensschritt
- 240: Verfahrensschritt
- 245: Verfahrensschritt

## Patentansprüche

1. Basismodul eines Netzwerkaufbaus (1), wobei das Basismodul (2) eine Logikeinheit (3) umfasst, welche dazu konfiguriert ist, mit einem Kommunikationsbus (4) zum Bereitstellen einer Kommunikation zwischen der Logikeinheit (3) und einem oder mehreren Erweiterungsmodulen (5), insbesondere einem oder mehreren Funktionsgeräten und/oder Kommunikationsmodulen, zur Funktionserweiterung bzw. Funktionsbereitstellung des Netzwerkaufbaus (1) verbunden zu werden, wobei die Logikeinheit (3) dazu konfiguriert ist, über den Kommunikationsbus (4) nach einem an dem Kommunikationsbus (4) angeschlossenen Erweiterungsmodul (5) zu suchen, wobei die Logikeinheit (3) ferner dazu konfiguriert ist, ein Erweiterungsmodul (5) für den Kommunikationsbus (4) zu konfigurieren, wenn das Suchen ergibt, dass das Erweiterungsmodul (5) an dem Kommunikationsbus (4) angeschlossen ist, und wobei die Logikeinheit (3) derart konfiguriert ist, dass die Kommunikation über den Kommunikationsbus (4) zwischen der Logikeinheit (3) und den Erweiterungsmodulen (5) über ein systeminternes Kommunikationsprotokoll erfolgen kann, **dadurch gekennzeichnet, dass** die Logikeinheit (3) eine Plug-&-Play-Schnittstelle (9) zum Anschließen einer von der Logikeinheit (3) über Steuersignale direkt ansteuerbaren Plug-&-Play-Funktionseinheit aufweist.

2. Netzwerkaufbau mit einem Basismodul (2) gemäß Anspruch 1 umfassend:
a. wenigstens ein Erweiterungsmodul (5), insbesondere ein oder mehrere Funktionsgeräte und/oder Kommunikationsmodule, zur Funktionserweiterung bzw. Funktionsbereitstellung des Netzwerkaufbaus, und
b. einen Kommunikationsbus (4) zum Bereitstellen einer Kommunikation zwischen der Logikeinheit (3) des Basismoduls (2) und dem einen oder mehreren Erweiterungsmodulen (5).

3. Netzwerkaufbau nach Anspruch 2, wobei der Netzwerkaufbau (1) wenigstens eine Lichtquelle (10) und wenigstens einen Treiber (8) zum Antreiben der wenigstens einer Lichtquelle (10) umfasst, und wobei der wenigstens einen Treiber (8) als ein an den Kommunikationsbus (4) anschließbares Funktionsgerät ausgebildet ist.

4. Netzwerkaufbau nach Anspruch 2 oder 3, wobei das wenigstens eine Erweiterungsmodul (5) wenigstens ein Kommunikationsmodul (30, 30') zum Anbinden des Netzwerkaufbaus an ein Netzwerksystem umfasst.

5. Netzwerkaufbau nach Anspruch 4, wobei das wenigstens eine Kommunikationsmodul (30, 30') wenigstens ein Kommunikationsmodul zur drahtlosen Kommunikation mit einem Netzwerksystem umfasst.

6. Verfahren zum Konfigurieren eines Erweiterungsmoduls (5) eines Netzwerkaufbaus (1), wobei der Netzwerkaufbau (1) ein Basismodul (2) mit einer Logikeinheit (3), und einen Kommunikationsbus (4) zum Bereitstellen einer Kommunikation zwischen der Logikeinheit (3) und einem oder mehreren Erweiterungsmodulen (5), insbesondere einem oder mehreren Funktionsgeräten und/oder Kommunikationsmodulen, zur Funktionserweiterung bzw. Funktionsbereitstellung des Netzwerkaufbaus (1) umfasst, und wobei das Verfahren umfasst:
a. Suchen nach einem an dem Kommunikationsbus (4) angeschlossenen Erweiterungsmodul (5), und
b. Konfigurieren eines Erweiterungsmoduls (5) für den Kommunikationsbus (4), wenn das Suchen ergibt, dass das Erweiterungsmodul (5) an dem Kommunikationsbus (4) angeschlossen ist,
wobei die Kommunikation über den Kommunikationsbus (4) zwischen der Logikeinheit (3) und den Erweiterungsmodulen (5) über ein systeminternes Kommunikationsprotokoll erfolgt, **dadurch gekennzeichnet, dass**
die Logikeinheit (3) eine Plug-&-Play-Schnittstelle (9) zum Anschließen einer von der Logikeinheit (3) über Steuersignale direkt ansteuerbaren Plug-&-Play-Funktionseinheit aufweist.

7. Verfahren nach Anspruch 6, ferner umfassend:
a. Abfragen, ob das beim Suchen gefundene Erweiterungsmodul (5) ein Kommunikationsmodul ist, und
b. das Erweiterungsmodul dazu bestimmen, ein in dem Netzwerkaufbau (1) vorhandene Funktionsgerät durch das Kommunikationsmodul in einem Netzwerk zu repräsentieren, wenn die Abfrage ergibt, dass das beim Suchen gefundene Erweiterungsmodul (5) ein Kommunikationsmodul ist.

8. Verfahren nach Anspruch 7, wobei das Repräsentieren ein Benachrichtigen des Kommunikationsmoduls über den Typ des zu repräsentierenden Funktionsgeräts umfasst.

9. Verfahren nach einem der Ansprüche 6 bis 8, wobei das Repräsentieren ein Senden von Werkseinstellungen des zu repräsentierenden Funktionsgeräts an das Kommunikationsmodul umfasst.

10. Verfahren nach einem der Ansprüche 6 bis 9, wobei der Netzwerkaufbau ein als Leuchte ausgebildetes Erweiterungsmodul umfasst, und wobei das Verfahren ferner ein bestimmungsgemäßes Installieren der Leuchte und ein nachträgliches Kalibrieren der Leuchte umfasst.

11. Verfahren nach Anspruch 10, wobei das nachträgliche Kalibrieren der Leuchte ein Übertragen von Kalibrierungsdaten zur Kalibrierung der Leuchte an den Netzwerkaufbau über ein als Kommunikationsmodul ausgebildetes Erweiterungsmodul umfasst.

## Claims

1. A base module of a network assembly (1), the base module (2) comprising a logic unit (3) configured to be connected to a communication bus (4) for providing communication between the logic unit (3) and one or more extension modules (5), in particular one or more functional devices and/or communication modules, for function extension or function provision of the network assembly (1), wherein the logic unit (3) is configured to search via the communication bus (4) for an extension module connected to the communication bus (4) ), wherein the logic unit (3) is further configured to configure an extension module (5) for the communication bus (4) if the search results in the extension module (5) being connected to the communication bus (4), and wherein the logic unit (3) is configured such that communication via the communication bus (4) between the logic unit (3) and the expansion modules (5) can take place via a system-internal communication protocol, **characterised in that** the logic unit (3) has a plug & play interface (9) for connecting a plug-and-play functional unit which can be directly controlled by the logic unit (3) via control signals.

2. The network structure with a base module (2) according to claim 1, comprising:
a. at least one extension module (5), in particular one or more functional devices and/or communication modules, for extending the function or providing the function of the network structure, and
b. a communication bus (4) for providing communication between the logic unit (3) of the base module (2) and the one or more extension modules (5).

3. The network structure according to claim 2, wherein the network structure (1) comprises at least one light source (10) and at least one driver (8) for driving the at least one light source (10), and wherein the at least one driver (8) is designed as a functional device which can be connected to the communication bus (4).

4. The network structure according to claim 2 or 3, wherein the at least one extension module (5) comprises at least one communication module (30, 30') for connecting the network structure to a network system.

5. The network structure according to claim 4, wherein the at least one communication module (30, 30') comprises at least one communication module for wireless communication with a network system.

6. Method for configuring an extension module (5) of a network structure (1), wherein the network structure (1) comprises a base module (2) with a logic unit (3), and a communication bus (4) for providing communication between the logic unit (3) and one or more extension modules (5), in particular one or more functional devices and/or communication modules, for function extension or function provision of the network structure (1), and wherein the method comprises:
a. Search for an expansion module (5) connected to the communication bus (4), and
b. Configuring an extension module (5) for the communication bus (4) if the search shows that the extension module (5) is connected to the communication bus (4),
wherein the communication via the communication bus (4) between the logic unit (3) and the expansion modules (5) takes place via a system-internal communication protocol, **characterised in that** the logic unit (3) has a plug & play interface (9) for connecting a plug & play functional unit which can be directly controlled by the logic unit (3) via control signals.

7. The method of claim 6, further comprising:
a. Querying whether the extension module (5) found during the search is a communication module, and
b. determine the extension module to represent a functional device present in the network structure (1) by the communication module in a network if the query shows that the extension module (5) found during the search is a communication module.

8. The method of claim 7, wherein the representing comprises notifying the communication module of the type of functional device to be represented.

9. The method according to any one of claims 6 to 8, wherein the representing comprises sending factory settings of the functional device to be represented to the communication module.

10. The method according to any one of claims 6 to 9, wherein the network structure comprises an extension module in the form of a luminaire, and wherein the method further comprises installing the luminaire as intended and subsequently calibrating the luminaire.

11. The method according to claim 10, wherein the subsequent calibration of the luminaire comprises a transmission of calibration data for calibrating the luminaire to the network structure via an extension module designed as a communication module.

## Revendications

1. Module de base d'un ensemble de réseau (1), le module de base (2) comprenant une unité logique (3) configurée pour être connectée à un bus de communication (4) pour assurer la communication entre l'unité logique (3) et un ou plusieurs modules d'extension (5), en particulier un ou plusieurs dispositifs fonctionnels et/ou modules de communication, pour l'extension de fonction ou la fourniture de fonction de l'ensemble de réseau (1), dans lequel l'unité logique (3) est configurée pour rechercher via le bus de communication (4) un module d'extension connecté au bus de communication (4), l'unité logique (3) est en outre configurée pour configurer un module d'extension (5) pour le bus de communication (4) si la recherche aboutit à la connexion du module d'extension (5) au bus de communication (4), et l'unité logique (3) est configurée pour que la communication via le bus de communication (4) entre l'unité logique (3) et les modules d'extension (5) puisse avoir lieu via un protocole de communication interne au système, **caractérisé par le fait que** l'unité logique (3) possède une interface plug & play (9) pour connecter une unité fonctionnelle plug-and-play qui peut être directement contrôlée par l'unité logique (3) via des signaux de commande.

2. La structure de réseau avec un module de base (2) selon revendication 1, comprenant:
a. au moins un module d'extension (5), en particulier un ou plusieurs dispositifs fonctionnels et/ou modules de communication, pour l'extension de fonction ou la fourniture de fonction de la structure du réseau, et
b. un bus de communication (4) pour assurer la communication entre l'unité logique (3) du module de base (2) et un ou plusieurs modules d'extension (5).

3. La structure de réseau selon la revendication 2, dans laquelle la structure de réseau (1) comprend au moins une source lumineuse (10) et au moins un pilote (8) pour piloter au moins une source lumineuse (10), et dans laquelle le pilote (8) au moins est conçu comme un dispositif fonctionnel qui peut être connecté au bus de communication (4).

4. La structure de réseau selon la revendication 2 ou 3, dans laquelle au moins un module d'extension (5) comprend au moins un module de communication (30, 30') pour connecter la structure de réseau à un système de réseau.

5. La structure de réseau selon la revendication 4, dans laquelle au moins un module de communication (30, 30') comprend au moins un module de communication pour la communication sans fil avec un système de réseau.

6. Procédé de configuration d'un module d'extension (5) d'une structure de réseau (1), dans lequel la structure de réseau (1) comprend un module de base (2) avec une unité logique (3), et un bus de communication (4) pour assurer la communication entre l'unité logique (3) et un ou plusieurs modules d'extension (5), en particulier un ou plusieurs dispositifs fonctionnels et/ou modules de communication, pour l'extension des fonctions ou la fourniture de fonctions de la structure de réseau (1), et dans lequel le procédé comprend :
a. Recherche d'un module d'extension (5) connecté au bus de communication (4), et
b. Configurer un module d'extension (5) pour le bus de communication (4) si la recherche montre que le module d'extension (5) est connecté au bus de communication (4),
dans lequel la communication via le bus de communication (4) entre l'unité logique (3) et les modules d'extension (5) s'effectue via un protocole de communication interne au système, **caractérisé par le fait que** l'unité logique (3) possède une interface plug & play (9) pour connecter une unité fonctionnelle plug & play qui peut être directement commandée par l'unité logique (3) via des signaux de commande.

7. Procédé selon de la revendication 6, comprenant en outre
a. Demander si le module d'extension (5) trouvé lors de la recherche est un module de communication, et
b. déterminer que le module d'extension représente un dispositif fonctionnel présent dans la structure du réseau (1) par le module de communication dans un réseau si la requête montre que le module d'extension (5) trouvé lors de la recherche est un module de communication.

8. Procédé selon de la revendication 7, dans laquelle la représentation consiste à notifier au module de communication le type de dispositif fonctionnel à représenter.

9. Procédé selon l'une des revendications 6 à 8, dans lequel la représentation comprend l'envoi au module de communication des paramètres d'usine du dispositif fonctionnel à représenter.

10. Procédé selon l'une des revendications 6 à 9, dans laquelle la structure du réseau comprend un module d'extension sous la forme d'un luminaire, et dans laquelle la méthode comprend en outre l'installation du luminaire comme prévu et l'étalonnage ultérieur du luminaire.

11. Procédé selon la revendication 10, dans lequel l'étalonnage ultérieur du luminaire comprend la transmission des données d'étalonnage du luminaire à la structure du réseau par l'intermédiaire d'un module d'extension conçu comme un module de communication.
